# EUROPEAN PATENT SPECIFICATION

(11) **EP 4 576 020 B1**
(45) Date of publication and mention of the grant of the patent: **12.11.2025**
(21) Application number: 23218017.4
(22) Date of filing: 19.12.2023
(51) Int. Cl.: G06V 10/74, G06V 20/52

(54) **METHOD AND SYSTEM FOR RE-IDENTIFICATION**
VERFAHREN UND SYSTEM ZUR ERNEUTEN IDENTIFIZIERUNG
PROCÉDÉ ET SYSTÈME DE RÉIDENTIFICATION

(43) Date of publication of application: 25.06.2025
(73) Proprietor: Axis AB, 223 69 Lund (SE)
(72) Inventor: Öhrn, Anton, 223 69 Lund (SE); Danielsson, Niclas, 223 69 Lund (SE); Yuan, Song, 223 69 Lund (SE)
(74) Representative: AWA Sweden AB

(56) References cited:
- EP-A1- 3 096 292
- WO-A1-2021/237749
- US-A1- 2023 360 360
- ZOU ZHIBO ET AL: "Compensation Tracker: Reprocessing Lost Object for Multi-Object Tracking", 2022 IEEE/CVF WINTER CONFERENCE ON APPLICATIONS OF COMPUTER VISION (WACV), IEEE, 3 January 2022 (2022-01-03), pages 2673, XP034086057, DOI: 10.1109/WACV51458.2022.00273
- PAMARTHY DIVIJA GOPIKA ET AL: "Unsupervised Person Re-Identification Using Similarity Score", 2023 2ND INTERNATIONAL CONFERENCE ON FUTURISTIC TECHNOLOGIES (INCOFT), IEEE, 24 November 2023 (2023-11-24), pages 1 - 6, XP034553329, DOI: 10.1109/INCOFT60753.2023.10425668

## Description

The present disclosure relates to a computer-implemented method for determining similarity in appearance of objects in image frames of at least one video sequence. The disclosure further relates to an image processing system configured to perform the method.

### Background

Re-identification in video sequences refers to the process of identifying and tracking an object across different image frames in a video sequence. This may be useful in a number of different applications and for a number of reasons. For example, in surveillance systems, identifying and tracking people or vehicles may be critical for security purposes. In other applications it may be useful to monitor and analyze, for example, the behavior and trajectory of an object over time. Moreover, many automated systems, such as those used in autonomous vehicles or robotics, rely on re-identification and object tracking for decision making.

When tracking objects in a video depicting a scene, object detections in a current frame are associated with object tracks from previous frames. Conventionally the association has been based on comparing the state, such as a position, of an object detected in the current frame to a predicted state. More recently methods have been developed that take into account the appearance of the tracked objects.

For this purpose feature vectors, which capture essential characteristics of an object's appearance, can be used in the re-identification. The feature vectors of different frames can be compared or matched to determine a similarity between objects detected in the different frames. Matching algorithms can be used to assess the similarity between the feature vectors to determine if they belong to the same object. One way of performing the re-identification is to use machine learning to extract feature vectors. A machine learning model may be trained on datasets of object images to generate similar feature vectors for images depicting the same physical object, and deviating feature vectors for images depicting different physical objects. A deep learning model may thereby be used as part of a process of tracking objects in a video.

Despite the recent progress in this technology, the re-identification still has challenges for certain setups and scenarios. As an example, imaging configurations that are optimized for human users typically involves digital processing of the captured images, which may cause failure in re-identifying an object in different image frames.

US 2023/360360 A1 (OHRN ANTON [SE] ET AL) discloses a method for weighting of features in a feature vector of an object detected in a video stream capturing a scene, comprising: determining a feature vector comprising a set of features for a detected object in the video stream; acquiring a reference feature vector of a reference model of the scene; and assigning a weight to at least one feature of the determined feature vector, wherein the weight for a feature of the determined feature vector depends on a deviation measure indicative of a degree of deviation of the feature from a corresponding feature of the acquired reference feature vector of the reference model.

### Summary

It is an object of the present disclosure to provide a system and a method for improving the re-identification of objects in image frames of at least one video sequence.

The present disclosure relates to, according to a first embodiment, a computer-implemented method for determining similarity in appearance of objects in image frames of at least one video sequence, comprising the steps of:
processing first raw image data of a first image frame in a first image processing pipeline applying first image processing settings, thereby obtaining a processed first image;
detecting a first object in the processed first image frame and extracting a first image area comprising the first object;
extracting, from the first image area, one or more first feature vectors describing the appearance of the first object;
processing second raw image data of a second image frame in a second image processing pipeline applying second image processing settings, thereby obtaining a processed second image;
detecting a second object in the processed second image frame and extracting a second image area comprising the second object;
extracting, from the second image area, one or more second feature vectors describing the appearance of the second object;
determining a similarity of the first object and the second object by comparing the one or more first feature vectors to the one or more second feature vectors;
if the one or more first feature vectors and the one or more second feature vectors differ by more than a first threshold, and the first image processing settings differ from the second image processing settings by more than a second threshold: re-processing the first raw image data corresponding to the first image area applying the second image processing settings; extracting, from the first image area, one or more updated first feature vectors;
comparing the one or more updated first feature vectors to the one or more second feature vectors.

In modern camera systems there is often an image processing pipeline in which the raw image data is processed. For example, the image processing pipeline may reduce noise, such as artifacts and image sensor noise, adjust contrast, brightness, color and other image properties. The image processing pipeline may operate using a set of image processing settings, which may, for example, be influenced or depend on environmental conditions, such as lighting or weather conditions, noise etc. It has been found that the variation in image processing settings between frames may cause differences in the feature vectors that are extracted from the processed images, which in turn cause failure in re-identifying the object.

By re-processing the first raw image data applying the second image processing settings if both the one or more second feature vectors differ by more than a first threshold and the first image processing settings differ from the second image processing settings by more than a second threshold, it is possible to obtain one or more updated first feature vectors that can be recompared against the one or more second feature vectors. The updated first feature vectors, i.e., feature vectors that have been re-processed using the image processing settings of another image frame, can be used in the second comparison to determine whether the difference between the first feature vectors and the second feature vectors was caused by actual feature vector differences, or whether it was caused by the fact that different image processing settings were used for the two image frames.

The step of comparing the one or more updated first feature vectors to the one or more second feature vectors can be used to update the determined similarity of the first object and the second object. One embodiment of the presently disclosed computer-implemented method for determining similarity in appearance of objects in image frames of at least one video sequence comprises the step of updating the determined similarity of the first object and the second object by comparing the one or more updated first feature vectors to the one or more second feature vectors.

In order to be able to re-process the first raw image data corresponding to the first image area applying the second image processing settings it may be necessary to temporarily store the first raw image data, preferably in a storage medium such as a random-access memory, at least until the one or more first feature vectors and the one or more second feature vectors have been compared. In the event that the first image processing settings differ from the second image processing settings by more than a second threshold, the first raw image data has to be stored until the first raw image data has been re-processed. If the criteria for re-processing are not fulfilled the first raw image data can be discarded, otherwise the first raw image data can be discarded after the re-processing. It is possible to temporarily store the first raw image data only for the first image area to avoid unnecessary use of memory. In the same way the re-processing may only need to be carried out for the first image area.

The presently disclosed computer-implemented method for determining similarity in appearance of objects in image frames of at least one video sequence can be performed repeatedly, for example, at fixed time intervals or at every n:th image frame in a video sequence to track an object. As would be realized by a person skilled in the art, the first/second raw image data, image frame, image settings, processed image, feature vectors etc. can be extended to third, fourth, fifth raw image data, image frame, image settings, processed image, feature vectors etc. with corresponding comparisons.

The present disclosure further relates to an image processing system comprising:
processing circuitry configured to:
process first raw image data of a first image frame in a first image processing pipeline applying first image processing settings, thereby obtaining a processed first image;
detect a first object in the processed first image frame and extracting a first image area comprising the first object;
extract, from the first image area, one or more first feature vectors describing the appearance of the first object;
process second raw image data of a second image frame in a second image processing pipeline applying second image processing settings, thereby obtaining a processed second image;
detect a second object in the processed second image frame and extracting a second image area comprising the second object;
extract, from the second image area, one or more second feature vectors describing the appearance of the second object;
determine a similarity of the first object and the second object by comparing the one or more first feature vectors to the one or more second feature vectors;
if the one or more first feature vectors and the one or more second feature vectors differ by more than a first threshold, and the first image processing settings differ from the second image processing settings by more than a second threshold: re-process the first raw image data corresponding to the first image area applying the second image processing settings; extract one or more updated first feature vectors;
compare the one or more updated first feature vectors to the one or more second feature vectors.

The system may further comprise one or more image sensors, preferably in one or more cameras, for capturing the image frames processed by the processing circuitry. The system may further comprise one or more displays for displaying the processed image frames, for example, in the form of one or more video sequences. The objects that are detected can be labelled on the display. Alternatively, or in combination, the processing circuitry may be configured to generate or extract metadata in which the objects are labelled according to, for example, their properties, object identifiers, or which object class they belong to. If the method for determining similarity in appearance of objects determines that the first object in the processed first image frame is the same as the second object in the processed second image frame, or at least that the likelihood is greater than a predefined threshold, a user may be able to follow the object with an appropriate label. Alternatively, or in combination, the extracted information may be used in other applications, such as for analytical purposes.

A person skilled in the art will recognize that the presently disclosed method for improving the re-identification of objects in image frames of at least one video sequence may be performed using any embodiment of the presently disclosed image processing system, and vice versa.

### Brief description of drawings

Various embodiments are described hereinafter with reference to the drawings. The drawings are examples of embodiments and are intended to illustrate some of the features of the presently disclosed method and system for determining similarity in appearance of objects in image frames of at least one video sequence.
Fig. 1 shows an example of a flow chart of the presently disclosed method for determining similarity in appearance of objects in image frames of at least one video sequence.
Fig. 2 shows an illustration of two objects in two different image frames.
Fig. 3 shows an example of an embodiment of the presently disclosed method for determining similarity in appearance of objects in image frames of at least one video sequence.
Figs. 4A-B show possible configurations of the presently disclosed image processing system.

### Detailed description

The present disclosure relates to a computer-implemented method for determining similarity in appearance of objects in image frames of at least one video sequence. The disclosure further relates to a method of tracking one or more objects in at least one video sequence using the presently disclosed method for determining similarity in appearance of objects in image frames of at least one video sequence.

The method comprises the steps of:
processing first raw image data of a first image frame in a first image processing pipeline applying first image processing settings, thereby obtaining a processed first image;
detecting a first object in the processed first image frame and extracting a first image area comprising the first object;
extracting, from the first image area, one or more first feature vectors describing the appearance of the first object.

The method further comprises the steps of:
processing second raw image data of a second image frame in a second image processing pipeline applying second image processing settings, thereby obtaining a processed second image;
detecting a second object in the processed second image frame and extracting a second image area comprising the second object;
extracting, from the second image area, one or more second feature vectors describing the appearance of the second object.

The method may further comprise the step of displaying the first object and/or the second object, preferably adding a label to indicate an identity of the object being tracked.

Moreover, if the presently disclosed method for determining similarity in appearance of objects determines that the similarity between the objects in the image frames is above a similarity threshold, the first object may be associated with the second object. This may include, for example, providing an indication that the first and second objects are considered to be the same object. This may include the step of outputting metadata, for example in the form of a common label, indicative of an association between the first and second object.

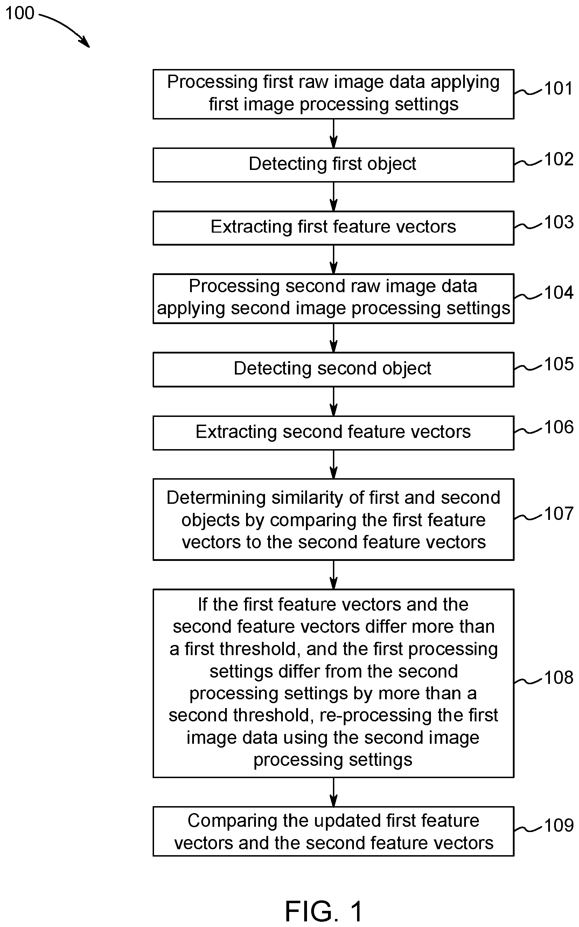

Fig. 1 shows an example of an embodiment of the presently disclosed method 100 for determining similarity in appearance of objects in image frames of at least one video sequence. In the specific example of fig. 1 the computer-implemented method 100 for determining similarity in appearance of objects in image frames of at least one video sequence comprises the steps of:
processing first raw image data of a first image frame in a first image processing pipeline applying first image processing settings, thereby obtaining a processed first image (101);
detecting a first object in the processed first image frame and extracting a first image area comprising the first object (102);
extracting, from the first image area, one or more first feature vectors describing the appearance of the first object (103);
processing second raw image data of a second image frame in a second image processing pipeline applying second image processing settings, thereby obtaining a processed second image (104);
detecting a second object in the processed second image frame and extracting a second image area comprising the second object (105);
extracting, from the second image area, one or more second feature vectors describing the appearance of the second object (106);
determining a similarity of the first object and the second object by comparing the one or more first feature vectors to the one or more second feature vectors (107);
if the one or more first feature vectors and the one or more second feature vectors differ by more than a first threshold, and the first image processing settings differ from the second image processing settings by more than a second threshold: re-processing the first raw image data corresponding to the first image area applying the second image processing settings; extracting, from the first image area, one or more updated first feature vectors (108);
comparing the one or more updated first feature vectors to the one or more second feature vectors (109).

The step of detecting a first object in the processed first image frame and the step of detecting a second object in the processed second image frame may be done in several ways. The step may, for example, include the use of a convolutional neural network, and may detect objects in substantially real-time. One example of a method for object detection is the method described in J. Redmon, S. Divvala, R. Girshick and A. Farhadi, "You Only Look Once: Unified, Real-Time Object Detection," 2016 IEEE Conference on Computer Vision and Pattern Recognition (CVPR), Las Vegas, NV, USA, 2016, pp. 779-788, doi: 10.1109/CVPR.2016.91, hereinafter referred to as YOLO. The YOLO method divides an input image into a grid of cells. For each cell bounding boxes are predicted using a single convolutional network. For each bounding box a likelihood that the detected object belongs to different predefined classes are calculated. Low-confidence bounding boxes can then be filtered out. As a person skilled in the art would realize, the presently disclosed computer-implemented method for determining similarity in appearance of objects may use the YOLO method or other similar methods capable of detecting objects in images.

As would be recognized by a person skilled in the art, the step of extracting one or more first feature vectors describing the appearance of the first object and/or extracting one or more second feature vectors describing the appearance of the second object, may also be carried out in several ways. For example, the step of extracting one or more first feature vectors and/or extracting one or more second feature vectors comprises applying a machine learning model, such as a neural network. For this purpose the method may use a convolutional neural network or equivalent. The convolutional neural network or equivalent will preferably have been pre-trained to extract feature vectors. During training of such a network it may, for example, be possible to use triplets of images. The triplets may comprise an anchor, a positive and a negative. The triplets may comprise roughly aligned matching / non-matching objects. The loss function, which is a function that quantifies the difference between the predicted output and the ground truth, may involve known technologies such as triplet loss and softmax loss. One example of a convolutional neural network for extracting feature vectors, and the training of the same, is described in Schroff, F., Kalenichenko, D. and Philbin, J. (2015) "Facenet: A Unified Embedding for Face Recognition and Clustering". Proceedings of the IEEE Conference on Computer Vision and Pattern Recognition, Boston, 7-12 June 2015, 815-823, hereinafter referred to as FaceNet. Accordingly, the machine learning model may have been trained to calculate feature vectors that are closer to each other for objects which are the same and further apart from each other for objects which are different. That is, the distance, as measured by a suitable distance metric such as the L2-norm, between feature vectors of objects which are the same is shorter than the distance between feature features of objects which are different. The distance between the feature vectors may thus be used to measure a similarity of the feature vectors and thereby the objects, wherein the similarity increases with decreasing distance between the feature vectors.

The first and second image frames may be image frames from one image sensor of a camera at different points in time, wherein the first image frame and second image frame are image frames from one video sequence. The first image frame may, for example, be captured before the second image frame or the second image frame may be captured before the first image frame. It is also possible that the first image frame and second image frame are image frames from multiple image sensors. The multiple image sensors may be multiple image sensors depicting different views of a scene. For such embodiments, the first and second image frames may still be image frames at different points in time. Alternatively, the first and second image frames are image frames captured at the same time. Some cameras have multiple image sensors for capturing a wider, or even a full 360 degree, view. The first and second image frames may be image frames from two of these image sensors, and, as would be understood by a person skilled in the art, further extended to any number of image sensors and image frames. The multiple image sensors may also be sensors of different cameras.

In the embodiment in which the first image frame and the second image frame are image frames from multiple image sensors, the first image frame and second image frame may be image frames from different video sequences.

The method may further comprise the step of determining a similarity of the first object and the second object by comparing the one or more first feature vectors to the one or more second feature vectors. In this regard feature vectors may be seen as numerical representations of an object's visual characteristics extracted from the processed first and second image frames, respectively. The term 'feature vector' is commonly used in machine learning and would as such be known by a person skilled in the art. The one or more first feature vectors and the one or more second feature vectors may also be referred to as re-identification vectors. Comparing the one or more first feature vectors to the one or more second feature vectors may involve assessing the similarity or dissimilarity between the one or more first feature vectors to the one or more second feature vectors. A number of possible similarity metrics can be used for this purpose. The choice of similarity metric may depend on factors such as the content of the scene, properties of the objects and parameters and requirements related to the re-identification. Possible similarity metrics include, but are not limited to, Euclidian distance, Manhattan distance, Jaccard similarity, Hamming distance etc. It can be noted that the step of comparing the one or more updated first feature vectors to the one or more second feature vectors may perform the same comparison, i.e. the second comparison may apply, for example, the above described similarity metrics. Accordingly, the step of comparing the one or more first feature vectors to the one or more second feature vectors and/or the step of comparing the one or more updated first feature vectors to the one or more second feature vectors may comprise using a similarity metric to calculate a similarity between the one or more first feature vectors and the one or more second feature vectors, and thereby also a similarity between the first object and the second object.

A further option when comparing the one or more first feature vectors to the one or more second feature vectors is to include a first step of determining which object class the first and second object belong to. This is a task that a machine learning algorithm can typically perform with a high level of accuracy. The step of determining which object class the first and second object belong to may in practice be performed as part of the step of detecting the first and second object in the processed first image frame and processed second image frame, respectively. Commonly known object detectors, such as the above-mentioned YOLO and further developments of it, are typically capable of determining a position and an object class for the detected objects. The presently disclosed computer-implemented method for determining similarity in appearance of objects is not limited to any specific object detection algorithm or architecture. In certain cases, object detectors only include object localization and detection. For such applications it is possible to use an additional classifier to determine which object class the first and second object belong to. Examples of architectures capable of performing object classification include AlexNet, VGG16, GoogleNets, EfficientNet and Regnet. According to one embodiment the method may comprise the step of determining whether the first object and the second object are of the same object class. If the first object and the second object are not of the same class, it can be assumed that they are not the same object. There is then no need to further compare the feature vectors.

While the objects may be any objects, the presently disclosed method for determining similarity in appearance of objects may be particularly useful for humans. In one embodiment the first and second object are humans. In a number of surveillance scenarios it may be useful to be able to track an individual in one or more video sequences. Modern machine learning-based re-identification methods have the ability to re-identify and track an individual even if the individual, for example, turns around, changes body position etc. between image frames. The presently disclosed method for determining similarity in appearance of objects can further improve such re-identification by ensuring that the comparisons of feature vectors are done using the same image processing settings if there is a doubt of whether the objects are the same. The presently disclosed method for determining similarity in appearance of objects may be also be used in applications in which the objects are vehicles. In one embodiment the first and second object are, accordingly, vehicles. Further applications are possible. For example, animals, items in warehouses and shops, and transportation goods can be re-identified and tracked.

If the one or more first feature vectors and the one or more second feature vectors differ by more than a first threshold, and, additionally, the first image processing settings differ from the second image processing settings by more than a second threshold, the first raw data is re-processed. The first image processing settings differing from the second image processing settings by more than a second threshold may have the meaning that one or more parameters that is part of the processing settings, for example, a gain and/or exposure compensation and/or white balance and/or color adjustment, such as local tone mapping, can be adjusted in a way that it is possible to refer to a quantified difference. As an example, a "gain" in the context of processing a raw image may refer to an adjustment of the intensity or brightness of the image. The gain may be expressed in decibels (dB), which can be compared from one image processing setting to another. Similar levels exist for other similar settings, including the above listed settings. The re-processing may be carried out on the first raw image data corresponding to the first image area. In order to reduce computations, as well as the temporarily stored data, only a portion covering the first image area may need to be re-processed. In this case only the raw image data corresponding to the portion covering the first image area needs to be temporarily stored for re-processing. The re-processing is performed on the first raw image data using the second image processing settings. The re-processing generates a new processed image, which can be referred to as an updated processed first image. Optionally, it is now possible also to re-detect an object, such as the first object, in the updated processed first image and/or extract from the first image area, one or more updated first feature vectors describing the appearance of the first object. The one or more updated first feature vectors can then be re-compared to the one or more second feature vectors.

As would generally be understood by a person skilled in the art, the use of first/second raw image data, image frame, image settings, processed image, feature vectors etc. does not necessarily have the meaning that the first image frame is captured before the second image frame. If, for example, the first image frame is captured before the second image frame, it is possible to re-process the first raw image data corresponding to the first image area applying the second image processing settings and extract one or more updated first feature vectors, but it would also be possible to re-process the second raw image data corresponding to the second image area applying the first image processing settings and extract one or more updated second feature vectors, which could then be compared to the one or more first feature vectors. Both of these variants may be useful. For this reason the first/second raw image data, image frame, image settings, processed image, feature vectors etc. may refer to images from different points in time, wherein the "first" is not necessarily captured before the "second".

The first image area comprising the first object and second image area comprising the second object may refer to regions or sub-areas of the first image frame and the second image frame, respectively. Extracting a region or sub-area of an image frame is sometimes also referred to as cropping. In the present disclosure the first image area and second image area may refer to an area encapsulating the first/second object, wherein the area is smaller than the area of the entire first/second image frame. The first image area and second image area are typically, but not necessarily, rectangular or square-shaped.

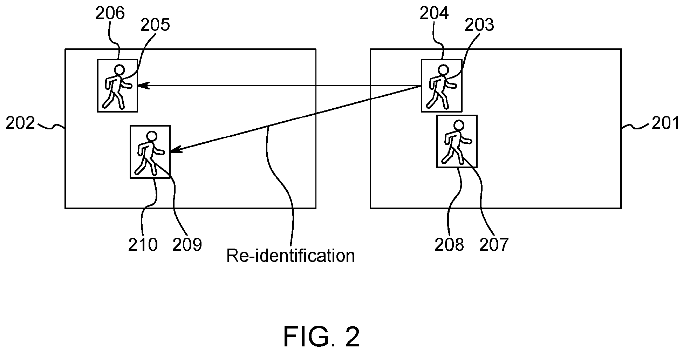

Fig. 2 shows an example of an embodiment of the presently disclosed method for determining similarity in appearance of objects in image frames of at least one video sequence. In this example the image frame to the left is the first image frame 202. The image frame to the right is the second image frame 201. As can be seen the first image frame 202 comprises two first objects 205 and 209. The second image frame 201 comprises two second objects 203 and 207. A first image area 206 in the first image frame 202 comprises the first object 205. Another first image area 210 comprises another first object 209. A second image area 204 in the second image frame 201 comprises the second object 203. Another second image area 208 comprises another second object 207. In the process of re-identifying an object from one image frame to another, it can be seen in the example that second object 203 in the second image frame 201 could potentially be either the first object 205 or the other first object 209 that has moved to a new position from the first image frame 202 to the second image frame 201. The presently disclosed computer-implemented method for determining similarity in appearance of objects in image frames can be used to assess the similarity between the second object 203 and the first object 205 and/or the other first object 209 to re-identify one of the first object 205 and 209 as being the same as the second object 203.

In one embodiment of the presently disclosed method for determining similarity in appearance of objects, the step of comparing the one or more first feature vectors to the one or more second feature vectors and/or the step of comparing the one or more updated first feature vectors to the one or more second feature vectors comprises applying a machine learning model, such as a neural network, that has been trained to compare the appearance of two objects based on feature vectors describing the appearance of the two objects. Training a machine learning model, such as a neural network, may typically involve collecting a training dataset including annotations or other information indicating which objects are the same or different in the different frames. As previously explained, a machine learning model may be trained, for example, by using triplet training, on images of objects which are known to be the same or different, to calculate feature vectors that are closer to each other for objects which are the same and further apart from each other for objects which are different. When the one or more first and second feature vectors have been extracted, the comparison of the feature vectors may be done using a similarity/dissimilarity measure. As described above, one example of a similarity metric is Euclidian distance. In the example of using the FaceNet system to measure a similarity, squared L2 distances are used to determine object similarity. The feature vectors may be provided in any suitable format, such as arrays, database entries, text files, binary formats etc. The training may involve other well-known steps, such as data augmentation, transfer learning, validation etc.

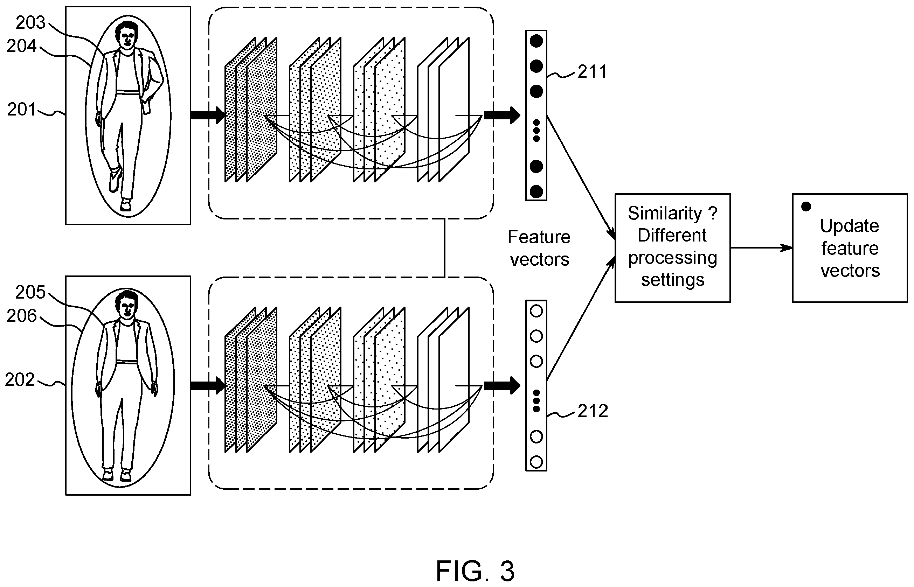

Fig. 3 shows an example of an embodiment of the presently disclosed method for determining similarity in appearance of objects in image frames of at least one video sequence. In this example, for a first object 205 in a first image area 206 in a first image frame 202, a number of first feature vectors 212 describing the appearance of the first object 205 are extracted. For the second image frame 201, a number of second feature vectors 211 describing the appearance of a second object 203 are extracted. The next step is to determine a similarity of the first object 205 and the second object 203 by comparing the one or more first feature vectors 212 to the one or more second feature vectors 211. If the first feature vectors 212 and the second feature vectors 211 differ by more than a first threshold and, at the same time, the first image processing settings differ from the second image processing settings by more than a second threshold, first raw image data corresponding to the first image area 206 is re-processed applying the second image processing settings, or vice versa. Based on this is possible to obtain updated first feature vectors that can be re-compared to the one or more second feature vectors.

As described above, in one embodiment of the presently disclosed method for determining similarity in appearance of objects, the first raw image data corresponding to at least the first image area is temporarily stored until the one or more first feature vectors and the one or more second feature vectors have been compared, and, in the event that the first image processing settings differ from the second image processing settings by more than a second threshold, until the first raw image data has been re-processed. The first raw image data and/or the second raw image data may be temporarily stored until the one or more first feature vectors have been compared to the one or more second feature vectors and/or until the first raw image data has been re-processed. After the comparison the raw image data may be discarded. In one embodiment the first raw image data and/or the second raw image data is discarded after the one or more first feature vectors have been compared to the one or more second feature vectors and/or the first raw image data has been re-processed.

The present disclosure further relates to a computer program having instructions which, when executed by a computing device or computing system, cause the computing device or computing system to carry out any embodiment of the presently disclosed method for determining similarity in appearance of objects. The computer program may be stored on any suitable type of storage media, such as non-transitory storage media.

As stated above the present disclosure further relates to an image processing system comprising processing circuitry configured to carry out any embodiment of the presently disclosed method for determining similarity in appearance of objects. The processing circuitry may comprise a single image processing pipeline, wherein the first image processing pipeline is the same image processing pipeline as the second image processing pipeline, or separate image processing pipelines for processing the first raw image data of the first image frame and the second raw image data of the second image frame. The latter may be useful if there are, for example, multiple cameras for capturing different views of a scene.

The image processing system may comprise a machine learning model, such as a neural network, that has been trained to compare the appearance of two objects based on feature vectors describing the appearance of the two objects.

The system may, but does not necessarily have to, include a display for displaying the processed image frames of the at least one video sequence. When tracking an object it may be useful to display the object with, for example, a label or bounding box. However, in other applications the re-identified objects are not necessarily displayed but used in additional applications, including, for example, further analysis.

The system may further comprise peripheral components, such as one or more memory units, which may be used for storing instructions that can be executed by the processing circuitry. The system may further comprise internal and external network interfaces, input and/or output ports etc.

As would be understood by a person skilled in the art, the processing circuitry may comprise a single processor or a processing unit in a multi-core/multiprocessor system. The processing circuitry may be connected to a data communication infrastructure.

The system may include one or more memory units, such as a random access memory (RAM) and/or a read-only memory (ROM), or any suitable type of memory. The system may further comprise a communication interface that allows software and/or data to be transferred between the system and external devices. Software and/or data transferred via the communications interface may be in any suitable form of electric, optical or RF signals. The communications interface may comprise, for example, a cable or a wireless interface. The camera(s) may be connected to the processing circuitry by means of one or more Ethernet cables, possibly employing Power of Ethernet.

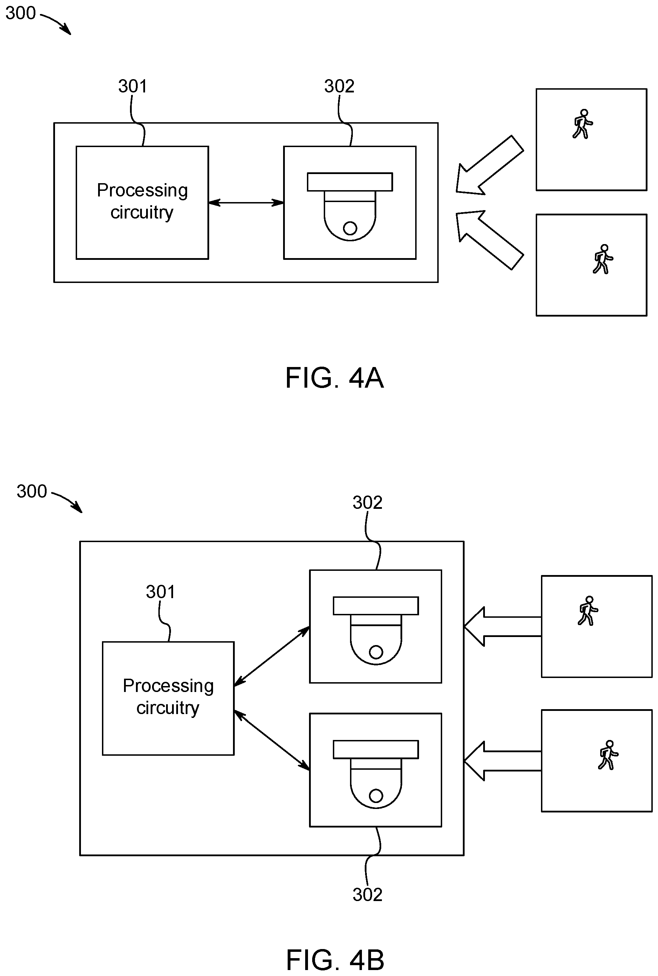

Figs. 4A-B show two possible configurations of the presently disclosed image processing system 300. In the example of fig. 4A the image processing system 300 comprises processing circuitry 301 and a camera 302 for capturing the image frames of at least one video sequence, including at least a first image frame and a second image frame. To the right in the example it can be seen how an object has changed between the two image frames. The camera 302 may comprise only one image sensors or a plurality of image sensors. In the example of fig. 4B the image processing system 300 comprises processing circuitry 301 and two cameras 302 for capturing the image frames of at least one video sequence, including at least a first image frame and a second image frame. To the right in the example it can be seen how an object has changed between the two image frames. It can be noted that the processing circuitry may have a single image processing pipeline, but it is also possible that each camera has its own image processing pipeline.

## Claims

1. A computer-implemented method (100) for determining similarity in appearance of objects (203; 205; 207; 209) in image frames (201; 202) of at least one video sequence, the method comprising:
processing (101) first raw image data of a first image frame (202) in a first image processing pipeline applying first image processing settings, thereby obtaining a processed first image;
detecting (102) a first object (205) in the processed first image frame (202) and extracting a first image area (206) comprising the first object (205);
extracting (103), from the first image area (206), one or more first feature vectors (212) describing the appearance of the first object (205);
processing (104) second raw image data of a second image frame (201) in a second image processing pipeline applying second image processing settings, thereby obtaining a processed second image;
detecting (105) a second object (203) in the processed second image frame (201) and extracting a second image area (204) comprising the second object (203);
extracting (106), from the second image area (204), one or more second feature vectors (211) describing the appearance of the second object (203);
determining (107) a similarity of the first object (205) and the second object (203) by comparing the one or more first feature vectors (212) to the one or more second feature vectors (211);
**characterized in that**:
if the one or more first feature vectors (212) and the one or more second feature vectors (211) differ by more than a first threshold, and the first image processing settings differ from the second image processing settings by more than a second threshold: re-processing (108) the first raw image data corresponding to the first image area (206) applying the second image processing settings; extracting, from the first image area (206), one or more updated first feature vectors;
comparing (109) the one or more updated first feature vectors to the one or more second feature vectors (211).

2. The computer-implemented method (100) for determining similarity in appearance of objects (203; 205; 207; 209) according to claim 1, wherein the first raw image data corresponding to at least the first image area (206) is temporarily stored until the one or more first feature vectors (212) and the one or more second feature vectors (211) have been compared, and, in the event that the first image processing settings differ from the second image processing settings by more than a second threshold, until the first raw image data has been re-processed.

3. The computer-implemented method (100) for determining similarity in appearance of objects (203; 205; 207; 209) according to claim 2, wherein the first raw image data and/or the second raw image data is temporarily stored until the one or more first feature vectors (212) have been compared to the one or more second feature vectors (211) and/or until the first raw image data has been re-processed.

4. The computer-implemented method (100) for determining similarity in appearance of objects (203; 205; 207; 209) according to any one of claims 2-3, wherein the first raw image data and/or the second raw image data is discarded after the one or more first feature vectors (212) have been compared to the one or more second feature vectors (211) and/or the first raw image data has been re-processed.

5. The computer-implemented method (100) for determining similarity in appearance of objects (203; 205; 207; 209) according to any one of the preceding claims, wherein the first image frame (202) is captured before the second image frame (201) or the second image frame (201) is captured before the first image frame (202).

6. The computer-implemented method (100) for determining similarity in appearance of objects (203; 205; 207; 209) according to any one of the preceding claims, wherein the step of comparing the one or more first feature vectors (212) to the one or more second feature vectors (211) comprises determining whether the first object (205) and the second object (203) are of the same object class.

7. The computer-implemented method (100) for determining similarity in appearance of objects (203; 205; 207; 209) according to any one of the preceding claims, wherein the one or more first feature vectors (212) and the one or more second feature vectors (211) are numerical representations of characteristics extracted from the processed first image frame (202) and second image frame (201), respectively.

8. The computer-implemented method (100) for determining similarity in appearance of objects (203; 205; 207; 209) according to any one of the preceding claims, wherein the step of extracting (103) one or more first feature vectors (212) and/or extracting (106) one or more second feature vectors (211) comprises applying a machine learning model, such as a neural network.

9. The computer-implemented method (100) for determining similarity in appearance of objects (203; 205; 207; 209) according to claim 8, wherein the machine learning model has been trained to calculate feature vectors that are closer to each other for objects which are the same and further apart from each other for objects which are different.

10. The computer-implemented method (100) for determining similarity in appearance of objects (203; 205; 207; 209) according to any one of the preceding claims, wherein the step of comparing the one or more first feature vectors (212) to the one or more second feature vectors (211) and/or the step of comparing the one or more updated first feature vectors (212) to the one or more second feature vectors (211) comprises using a similarity metric to calculate a similarity between the first object (205) and the second object (203).

11. The computer-implemented method (100) for determining similarity in appearance of objects (203; 205; 207; 209) according to any one of the preceding claims, wherein the first image processing settings and second image processing settings comprise settings related to gain and/or exposure compensation and/or white balance and/or color adjustment, such as local tone mapping.

12. The computer-implemented method (100) for determining similarity in appearance of objects (203; 205; 207; 209) according to any one of the preceding claims, wherein the first image frame (202) and the second image frame (201) are image frames from one image sensor of a camera at different points in time, wherein the first image frame (202) and second image frame (201) are image frames from one video sequence.

13. The computer-implemented method (100) for determining similarity in appearance of objects (203; 205; 207; 209) according to any one of claims 1-11, wherein the first image frame (202) and the second image frame (201) are image frames from multiple image sensors of a camera, wherein the first image frame (202) and second image frame (201) are image frames from different video sequences.

14. A computer program having instructions which, when executed by a computing device or computing system, cause the computing device or computing system to carry out the method (100) for determining similarity in appearance of objects (203; 205; 207; 209) according to any one of claims 1-13.

15. An image processing system (300) comprising:
processing circuitry (301) configured to:
process first raw image data of a first image frame (202) in a first image processing pipeline applying first image processing settings, thereby obtaining a processed first image;
detect a first object (205) in the processed first image frame (202) and extracting a first image area (206) comprising the first object (205);
extract, from the first image area (206), one or more first feature vectors (212) describing the appearance of the first object (205);
process second raw image data of a second image frame (201) in a second image processing pipeline applying second image processing settings, thereby obtaining a processed second image;
detect a second object (203) in the processed second image frame (201) and extracting a second image area (204) comprising the second object (203);
extract, from the second image area (204), one or more second feature vectors (211) describing the appearance of the second object (203);
determine a similarity of the first object (205) and the second object (203) by comparing the one or more first feature vectors (212) to the one or more second feature vectors (211);
**characterized in that** the processing circuitry is configured to:
if the one or more first feature vectors (212) and the one or more second feature vectors (211) differ by more than a first threshold, and the first image processing settings differ from the second image processing settings by more than a second threshold: re-process the first raw image data corresponding to the first image area (206) applying the second image processing settings; extract one or more updated first feature vectors;
compare the one or more updated first feature vectors to the one or more second feature vectors.

## Patentansprüche

1. Computerimplementiertes Verfahren (100) zum Bestimmen von Ähnlichkeit im Aussehen von Objekten (203; 205; 207; 209) in Bild-Frames (201; 202) von mindestens einer Videosequenz, wobei das Verfahren Folgendes umfasst:
Verarbeiten (101) erster Rohbilddaten eines ersten Bild-Frames (202) in einer ersten Bildverarbeitungs-Pipeline unter Anwendung erster Bildverarbeitungseinstellungen, wodurch ein verarbeitetes erstes Bild erhalten wird;
Detektieren (102) eines ersten Objekts (205) in dem verarbeiteten ersten Bild-Frame (202) und Extrahieren eines ersten Bildbereichs (206), der das erste Objekt (205) umfasst;
Extrahieren (103), aus dem ersten Bildbereich (206), eines oder mehrerer erster Merkmalsvektoren (212), die das Aussehen des ersten Objekts (205) beschreiben;
Verarbeiten (104) zweiter Rohbilddaten eines zweiten Bild-Frames (201) in einer zweiten Bildverarbeitungs-Pipeline unter Anwendung zweiter Bildverarbeitungseinstellungen, wodurch ein verarbeitetes zweites Bild erhalten wird;
Detektieren (105) eines zweiten Objekts (203) in dem verarbeiteten zweiten Bild-Frame (201) und Extrahieren eines zweiten Bildbereichs (204), der das zweite Objekt (203) umfasst;
Extrahieren (106), aus dem zweiten Bildbereich (204), eines oder mehrerer zweiter Merkmalsvektoren (211), die das Aussehen des zweiten Objekts (203) beschreiben;
Bestimmen (107) einer Ähnlichkeit des ersten Objekts (205) und des zweiten Objekts (203) durch Vergleichen des einen oder der mehreren ersten Merkmalsvektoren (212) mit dem einen oder den mehreren zweiten Merkmalsvektoren (211);
**dadurch gekennzeichnet, dass**:
wenn sich der eine oder die mehreren ersten Merkmalsvektoren (212) und der eine oder die mehreren zweiten Merkmalsvektoren (211) um mehr als einen ersten Schwellenwert unterscheiden und sich die ersten Bildverarbeitungseinstellungen von den zweiten Bildverarbeitungseinstellungen um mehr als einen zweiten Schwellenwert unterscheiden: erneutes Verarbeiten (108) der ersten Rohbilddaten, die dem ersten Bildbereich (206) entsprechen, unter Anwendung der zweiten Bildverarbeitungseinstellungen; Extrahieren eines oder mehrerer aktualisierter erster Merkmalsvektoren aus dem ersten Bildbereich (206);
Vergleichen (109) des einen oder der mehreren aktualisierten ersten Merkmalsvektoren mit dem einen oder den mehreren zweiten Merkmalsvektoren (211).

2. Computerimplementiertes Verfahren (100) zum Bestimmen von Ähnlichkeit im Aussehen von Objekten (203; 205; 207; 209) gemäß Anspruch 1, wobei die ersten Rohbilddaten, die mindestens dem ersten Bildbereich (206) entsprechen, vorübergehend gespeichert werden, bis der eine oder die mehreren ersten Merkmalsvektoren (212) und der eine oder die mehreren zweiten Merkmalsvektoren (211) verglichen wurden, und für den Fall, dass sich die ersten Bildverarbeitungseinstellungen von den zweiten Bildverarbeitungseinstellungen um mehr als einen zweiten Schwellenwert unterscheiden, bis die ersten Rohbilddaten erneut verarbeitet wurden.

3. Computerimplementiertes Verfahren (100) zum Bestimmen von Ähnlichkeit im Aussehen von Objekten (203; 205; 207; 209) gemäß Anspruch 2, wobei die ersten Rohbilddaten und/oder die zweiten Rohbilddaten vorübergehend gespeichert werden, bis der eine oder die mehreren ersten Merkmalsvektoren (212) mit dem einen oder den mehreren zweiten Merkmalsvektoren (211) verglichen wurden und/oder bis die ersten Rohbilddaten erneut verarbeitet wurden.

4. Computerimplementiertes Verfahren (100) zum Bestimmen von Ähnlichkeit im Aussehen von Objekten (203; 205; 207; 209) gemäß einem der Ansprüche 2-3, wobei die ersten Rohbilddaten und/oder die zweiten Rohbilddaten verworfen werden, nachdem der eine oder die mehreren ersten Merkmalsvektoren (212) mit dem einen oder den mehreren zweiten Merkmalsvektoren (211) verglichen wurden und/oder die ersten Rohbilddaten erneut verarbeitet wurden.

5. Computerimplementierte Verfahren (100) zum Bestimmen von Ähnlichkeit im Aussehen von Objekten (203; 205; 207; 209) gemäß einem der vorhergehenden Ansprüche, wobei der erste Bild-Frame (202) vor dem zweiten Bild-Frame (201) erfasst wird oder der zweite Bild-Frame (201) vor dem ersten Bild-Frame (202) erfasst wird.

6. Computerimplementiertes Verfahren (100) zum Bestimmen von Ähnlichkeit im Aussehen von Objekten (203; 205; 207; 209) gemäß einem der vorhergehenden Ansprüche, wobei der Schritt des Vergleichens des einen oder der mehreren ersten Merkmalsvektoren (212) mit dem einen oder den mehreren zweiten Merkmalsvektoren (211) das Bestimmen, ob das erste Objekt (205) und das zweite Objekt (203) von derselben Objektklasse sind, umfasst.

7. Computerimplementiertes Verfahren (100) zum Bestimmen von Ähnlichkeit im Aussehen von Objekten (203; 205; 207; 209) gemäß einem der vorhergehenden Ansprüche, wobei der eine oder die mehreren ersten Merkmalsvektoren (212) und der eine oder die mehreren zweiten Merkmalsvektoren (211) numerische Darstellungen von Eigenschaften sind, die aus dem verarbeiteten ersten Bild-Frame (202) bzw. zweiten Bild-Frame (201) extrahiert werden.

8. Computerimplementiertes Verfahren (100) zum Bestimmen von Ähnlichkeit im Aussehen von Objekten (203; 205; 207; 209) gemäß einem der vorhergehenden Ansprüche, wobei der Schritt des Extrahierens (103) eines oder mehrerer erster Merkmalsvektoren (212) und/oder des Extrahierens (106) eines oder mehrerer zweiter Merkmalsvektoren (211) das Anwenden eines Maschinenlernmodells, wie etwa eines neuronalen Netzes, umfasst.

9. Computerimplementiertes Verfahren (100) zum Bestimmen von Ähnlichkeit im Aussehen von Objekten (203; 205; 207; 209) gemäß Anspruch 8, wobei das Maschinenlernmodell trainiert worden ist, um Merkmalsvektoren zu berechnen, die für Objekte, die gleich sind, einander näher sind und für Objekte, die unterschiedlich sind, weiter voneinander entfernt sind.

10. Computerimplementiertes Verfahren (100) zum Bestimmen von Ähnlichkeit im Aussehen von Objekten (203; 205; 207; 209) gemäß einem der vorhergehenden Ansprüche, wobei der Schritt des Vergleichens des einen oder der mehreren ersten Merkmalsvektoren (212) mit dem einen oder den mehreren zweiten Merkmalsvektoren (211) und/oder der Schritt des Vergleichens des einen oder der mehreren aktualisierten ersten Merkmalsvektoren (212) mit dem einen oder den mehreren zweiten Merkmalsvektoren (211) das Verwenden einer Ähnlichkeitsmetrik umfasst, um eine Ähnlichkeit zwischen dem ersten Objekt (205) und dem zweiten Objekt (203) zu berechnen.

11. Computerimplementiertes Verfahren (100) zum Bestimmen von Ähnlichkeit im Aussehen von Objekten (203; 205; 207; 209) gemäß einem der vorhergehenden Ansprüche, wobei die ersten Bildverarbeitungseinstellungen und die zweiten Bildverarbeitungseinstellungen Einstellungen umfassen, die sich auf Verstärkung und/oder Belichtungskompensation und/oder Weißabgleich und/oder Farbanpassung, wie etwa lokale Tonhöhenabbildung, beziehen.

12. Computerimplementiertes Verfahren (100) zum Bestimmen von Ähnlichkeit im Aussehen von Objekten (203; 205; 207; 209) gemäß einem der vorhergehenden Ansprüche, wobei der erste Bild-Frame (202) und der zweite Bild-Frame (201) Bild-Frames von einem einzigen Bildsensor einer Kamera zu unterschiedlichen Zeitpunkten sind, wobei der erste Bild-Frame (202) und der zweite Bild-Frame (201) Bild-Frames aus einer einzigen Videosequenz sind.

13. Computerimplementiertes Verfahren (100) zum Bestimmen von Ähnlichkeit im Aussehen von Objekten (203; 205; 207; 209) gemäß einem der Ansprüche 1-11, wobei der erste Bild-Frame (202) und der zweite Bild-Frame (201) Bild-Frames von mehreren Bildsensoren einer Kamera sind, wobei der erste Bild-Frame (202) und der zweite Bild-Frame (201) Bild-Frames aus unterschiedlichen Videosequenzen sind.

14. Computerprogramm mit Anweisungen, die, wenn sie durch eine Rechenvorrichtung oder ein Rechensystem ausgeführt werden, bewirken, dass die Rechenvorrichtung oder das Rechensystem das Verfahren (100) zum Bestimmen von Ähnlichkeit im Aussehen von Objekten (203; 205; 207; 209) nach einem der Ansprüche 1-13 ausführt.

15. Bildverarbeitungssystem (300), das Folgendes umfasst:
Verarbeitungsbeschaltung (301), die für Folgendes konfiguriert ist:
Verarbeiten erster Rohbilddaten eines ersten Bild-Frames (202) in einer ersten Bildverarbeitungs-Pipeline unter Anwendung erster Bildverarbeitungseinstellungen, wodurch ein verarbeitetes erstes Bild erhalten wird;
Detektieren eines ersten Objekts (205) in dem verarbeiteten ersten Bild-Frame (202) und Extrahieren eines ersten Bildbereichs (206), der das erste Objekt (205) umfasst;
Extrahieren, aus dem ersten Bildbereich (206), eines oder mehrerer erster Merkmalsvektoren (212), die das Aussehen des ersten Objekts (205) beschreiben;
Verarbeiten zweiter Rohbilddaten eines zweiten Bild-Frames (201) in einer zweiten Bildverarbeitungs-Pipeline unter Anwendung zweiter Bildverarbeitungseinstellungen, wodurch ein verarbeitetes zweites Bild erhalten wird;
Detektieren eines zweiten Objekts (203) in dem verarbeiteten zweiten Bild-Frame (201) und Extrahieren eines zweiten Bildbereichs (204), der das zweite Objekt (203) umfasst;
Extrahieren, aus dem zweiten Bildbereich (204), eines oder mehrerer zweiter Merkmalsvektoren (211), die das Aussehen des zweiten Objekts (203) beschreiben;
Bestimmen einer Ähnlichkeit des ersten Objekts (205) und des zweiten Objekts (203) durch Vergleichen des einen oder der mehreren ersten Merkmalsvektoren (212) mit dem einen oder den mehreren zweiten Merkmalsvektoren (211);
**dadurch gekennzeichnet, dass** die Verarbeitungsbeschaltung zu Folgendem konfiguriert ist:
wenn sich der eine oder die mehreren ersten Merkmalsvektoren (212) und der eine oder die mehreren zweiten Merkmalsvektoren (211) um mehr als einen ersten Schwellenwert unterscheiden und sich die ersten Bildverarbeitungseinstellungen von den zweiten Bildverarbeitungseinstellungen um mehr als einen zweiten Schwellenwert unterscheiden: erneutes Verarbeiten der ersten Rohbilddaten, die dem ersten Bildbereich (206) entsprechen, unter Anwendung der zweiten Bildverarbeitungseinstellungen; Extrahieren eines oder mehrerer aktualisierter erster Merkmalsvektoren;
Vergleichen des einen oder der mehreren aktualisierten ersten Merkmalsvektoren mit dem einen oder den mehreren zweiten Merkmalsvektoren.

## Revendications

1. Procédé (100) mis en œuvre par ordinateur pour déterminer une similitude d'apparence d'objets (203 ; 205 ; 207 ; 209) dans des trames d'image (201 ; 202) d'au moins une séquence vidéo, le procédé comprenant les étapes suivantes :
traiter (101) des premières données d'image brutes d'une première trame d'image (202) dans un premier pipeline de traitement d'image appliquant des premiers paramètres de traitement d'image, en obtenant ainsi une première image traitée ;
détecter (102) un premier objet (205) dans la première trame d'image (202) traitée et extraire une première zone d'image (206) comprenant le premier objet (205) ;
extraire (103), de la première zone d'image (206), un ou plusieurs premiers vecteurs de caractéristiques (212) décrivant l'apparence du premier objet (205) ;
traiter (104) des deuxièmes données d'image brutes d'une deuxième trame d'image (201) dans un deuxième pipeline de traitement d'image appliquant des deuxièmes paramètres de traitement d'image, en obtenant ainsi une deuxième image traitée ;
détecter (105) un deuxième objet (203) dans la deuxième trame d'image (201) traitée et extraire une deuxième zone d'image (204) comprenant le deuxième objet (203) ;
extraire (106), de la deuxième zone d'image (204), un ou plusieurs deuxièmes vecteurs de caractéristiques (211) décrivant l'apparence du deuxième objet (203) ;
déterminer (107) une similitude entre le premier objet (205) et le deuxième objet (203) en comparant les un ou plusieurs premiers vecteurs de caractéristiques (212) aux un ou plusieurs deuxièmes vecteurs de caractéristiques (211) ;
**caractérisé en ce que** :
si les un ou plusieurs premiers vecteurs de caractéristiques (212) et les un ou plusieurs deuxièmes vecteurs de caractéristiques (211) diffèrent de plus d'un premier seuil, et que les premiers paramètres de traitement d'image diffèrent des deuxièmes paramètres de traitement d'image de plus d'un deuxième seuil : retraiter (108) les premières données d'image brutes correspondant à la première zone d'image (206) appliquant les deuxièmes paramètres de traitement d'image ; extraire de la première zone d'image (206) un ou plusieurs premiers vecteurs de caractéristiques mis à jour ;
comparer (109) les un ou plusieurs premiers vecteurs de caractéristiques mis à jour aux un ou plusieurs deuxièmes vecteurs de caractéristiques (211).

2. Procédé mis en œuvre par ordinateur (100) pour déterminer une similitude d'apparence d'objets (203 ; 205 ; 207 ; 209) selon la revendication 1, dans lequel les premières données d'image brutes correspondant à au moins la première zone d'image (206) sont stockées temporairement jusqu'à ce que les un ou plusieurs premiers vecteurs de caractéristiques (212) et les un ou plusieurs deuxièmes vecteurs de caractéristiques (211) aient été comparés et, dans le cas où les premiers paramètres de traitement d'image diffèrent des deuxièmes paramètres de traitement d'image de plus d'un deuxième seuil, jusqu'à ce que les premières données d'image brutes aient été retraitées.

3. Procédé mis en œuvre par ordinateur (100) pour déterminer une similitude d'apparence d'objets (203 ; 205 ; 207 ; 209) selon la revendication 2, dans lequel les premières données d'image brutes et/ou les deuxièmes données d'image brutes sont stockées temporairement jusqu'à ce que les un ou plusieurs premiers vecteurs de caractéristiques (212) aient été comparés aux un ou plusieurs deuxièmes vecteurs de caractéristiques (211) et/ou jusqu'à ce que les premières données d'image brutes aient été retraitées.

4. Procédé mis en œuvre par ordinateur (100) pour déterminer une similitude d'apparence d'objets (203 ; 205 ; 207 ; 209) selon l'une quelconque des revendications 2 et 3, dans lequel les premières données d'image brutes et/ou les deuxièmes données d'image brutes sont rejetées après que les un ou plusieurs premiers vecteurs de caractéristiques (212) ont été comparés aux un ou plusieurs deuxièmes vecteurs de caractéristiques (211) et/ou que les premières données d'image brutes ont été retraitées.

5. Procédé mis en œuvre par ordinateur (100) pour déterminer une similitude d'apparence d'objets (203 ; 205 ; 207 ; 209) selon l'une quelconque des revendications précédentes, dans lequel la première trame d'image (202) est capturée avant la deuxième trame d'image (201) ou la deuxième trame d'image (201) est capturée avant la première trame d'image (202).

6. Procédé mis en œuvre par ordinateur (100) pour déterminer une similitude d'apparence d'objets (203 ; 205 ; 207 ; 209) selon l'une quelconque des revendications précédentes, dans lequel l'étape de comparaison des un ou plusieurs premiers vecteurs de caractéristiques (212) aux un ou plusieurs deuxièmes vecteurs de caractéristiques (211) comprend de déterminer si le premier objet (205) et le deuxième objet (203) sont de la même classe d'objets.

7. Procédé mis en œuvre par ordinateur (100) pour déterminer la similitude d'apparence d'objets (203 ; 205 ; 207 ; 209) selon l'une quelconque des revendications précédentes, dans lequel les un ou plusieurs premiers vecteurs de caractéristiques (212) et les un ou plusieurs deuxièmes vecteurs de caractéristiques (211) sont des représentations numériques de caractéristiques extraites de la première trame d'image (202) traitée et de la deuxième trame d'image (201) traitée, respectivement.

8. Procédé mis en œuvre par ordinateur (100) pour déterminer une similitude d'apparence d'objets (203 ; 205 ; 207 ; 209) selon l'une quelconque des revendications précédentes, dans lequel l'étape d'extraction (103) des un ou plusieurs premiers vecteurs de caractéristiques (212) et/ou d'extraction (106) des un ou plusieurs deuxièmes vecteurs de caractéristiques (211) comprend l'application d'un modèle d'apprentissage automatique, tel qu'un réseau neuronal.

9. Procédé mis en œuvre par ordinateur (100) pour déterminer une similitude d'apparence d'objets (203 ; 205 ; 207 ; 209) selon la revendication 8, dans lequel le modèle d'apprentissage automatique a été entraîné pour calculer des vecteurs de caractéristiques qui sont plus proches les uns des autres pour des objets qui sont les mêmes et plus éloignés les uns des autres pour des objets qui sont différents.

10. Procédé mis en œuvre par ordinateur (100) pour déterminer une similitude d'apparence d'objets (203 ; 205 ; 207 ; 209) selon l'une quelconque des revendications précédentes, dans lequel l'étape de comparaison des un ou plusieurs premiers vecteurs de caractéristiques (212) aux un ou plusieurs deuxièmes vecteurs de caractéristiques (211) et/ou l'étape de comparaison des un ou plusieurs premiers vecteurs de caractéristiques mis à jour (212) aux un ou plusieurs deuxièmes vecteurs de caractéristiques (211) comprend d'utiliser une métrique de similitude pour calculer une similitude entre le premier objet (205) et le deuxième objet (203).

11. Procédé mis en œuvre par ordinateur (100) pour déterminer une similitude d'apparence d'objets (203 ; 205 ; 207 ; 209) selon l'une quelconque des revendications précédentes, dans lequel les premiers paramètres de traitement d'image et les deuxièmes paramètres de traitement d'image comprennent des paramètres liés à la compensation de gain et/ou d'exposition et/ou à la balance des blancs et/ou à l'ajustement des couleurs, tel qu'un mappage de tons locaux.

12. Procédé mis en œuvre par ordinateur (100) pour déterminer la similitude d'apparence d'objets (203 ; 205 ; 207 ; 209) selon l'une quelconque des revendications précédentes, dans lequel la première trame d'image (202) et la deuxième trame d'image (201) sont des trames d'image provenant d'un capteur d'image d'une caméra à différents moments, où la première trame d'image (202) et la deuxième trame d'image (201) sont des trames d'image provenant d'une séquence vidéo.

13. Procédé mis en œuvre par ordinateur (100) pour déterminer une similitude d'apparence d'objets (203 ; 205 ; 207 ; 209) selon l'une quelconque des revendications 1 à 11, dans lequel la première trame d'image (202) et la deuxième trame d'image (201) sont des trames d'image provenant de plusieurs capteurs d'image d'une caméra, où la première trame d'image (202) et la deuxième trame d'image (201) sont des trames d'image provenant de séquences vidéo différentes.

14. Programme informatique comprenant des instructions qui, lorsqu'elles sont exécutées par un dispositif informatique ou un système informatique, amènent le dispositif informatique ou le système informatique à mettre en œuvre le procédé (100) pour déterminer une similitude d'apparence d'objets (203; 205; 207; 209) selon l'une quelconque des revendications 1 à 13.

15. Système de traitement d'image (300) comprenant :
des circuits de traitement (301) configurés pour :
traiter des premières données d'image brutes d'une première trame d'image (202) dans un premier pipeline de traitement d'image appliquant des premiers paramètres de traitement d'image, en obtenant ainsi une première image traitée ;
détecter un premier objet (205) dans la première trame d'image (202) traitée et extraire une première zone d'image (206) comprenant le premier objet (205) ;
extraire, de la première zone d'image (206), un ou plusieurs premiers vecteurs de caractéristiques (212) décrivant l'apparence du premier objet (205) ;
traiter des deuxièmes données d'image brutes d'une deuxième trame d'image (201) dans un deuxième pipeline de traitement d'image appliquant des deuxièmes paramètres de traitement d'image, en obtenant ainsi une deuxième image traitée ;
détecter un deuxième objet (203) dans la deuxième trame d'image (201) traitée et extraire une deuxième zone d'image (204) comprenant le deuxième objet (203) ;
extraire, de la deuxième zone d'image (204), un ou plusieurs deuxièmes vecteurs de caractéristiques (211) décrivant l'apparence du deuxième objet (203) ;
déterminer une similitude entre le premier objet (205) et le deuxième objet (203) en comparant les un ou plusieurs premiers vecteurs de caractéristiques (212) aux un ou plusieurs deuxièmes vecteurs de caractéristiques (211) ;
**caractérisé en ce que** les circuits de traitement sont configurés pour :
si les un ou plusieurs premiers vecteurs de caractéristiques (212) et les un ou plusieurs deuxièmes vecteurs de caractéristiques (211) diffèrent de plus d'un premier seuil, et que les premiers paramètres de traitement d'image diffèrent des deuxièmes paramètres de traitement d'image de plus d'un deuxième seuil : retraiter les premières données d'image brutes correspondant à la première zone d'image (206) appliquant les deuxièmes paramètres de traitement d'image ; extraire un ou plusieurs premiers vecteurs de caractéristiques mis à jour ;
comparer les un ou plusieurs premiers vecteurs de caractéristiques mis à jour aux un ou plusieurs deuxièmes vecteurs de caractéristiques.
